# EUROPEAN PATENT SPECIFICATION

(11) **EP 4 026 748 B1**
(45) Date of publication and mention of the grant of the patent: **16.07.2025**
(21) Application number: 21150775.1
(22) Date of filing: 08.01.2021
(51) Int. Cl.: B60W 60/00

(54) **METHOD, APPARATUS AND COMPUTER PROGRAM FOR AUTOMATED VEHICLES**
VERFAHREN, VORRICHTUNG UND COMPUTERPROGRAMM FÜR AUTOMATISIERTE FAHRZEUGE
PROCÉDÉ, APPAREIL ET PROGRAMME INFORMATIQUE POUR VÉHICULES AUTOMATISÉS

(43) Date of publication of application: 13.07.2022
(73) Proprietor: Volkswagen Aktiengesellschaft, 38440 Wolfsburg (DE)
(72) Inventor: Pfadler, Andreas, 13357 Berlin (DE)
(74) Representative: 2SPL Patentanwälte PartG mbB

(56) References cited:
- WO-A1-2019/185217
- DE-A1- 102017 222 874
- US-A1- 2015 149 019
- US-A1- 2016 343 247
- US-A1- 2018 335 785
- US-A1- 2020 133 307

## Description

The present invention relates to methods, apparatuses and computer programs for at least semi-autonomously operated vehicles, and in particular to adjustments being made to the at least semi-autonomous operation of said vehicles based on a prediction of a driving behavior of other at least semi-autonomously operated vehicles.

The research of automated (e.g. autonomously or semi-autonomously operated) vehicles is a field of research and development. In some scenarios, the future of mobility is linked with vehicles becoming simultaneously connected and automated. It is foreseen that in the near future more and more automated vehicles (AVs) will drive on public roads.

In general, different levels of automation are distinguished, e.g. SAE (Society of Automotive Engineers) Level 1-5. For example, German patent application DE 10 2015 205 135 A1 discloses different levels of automation that are available for use in vehicles, depending on a scenario the vehicle is in. For example, the level of automation currently available can be transmitted to other vehicles in the aforementioned patent application. A similar concept is used in US patent application US 2017/0158116 A1, where a vehicle provides a notification regarding whether the vehicle is under manual, semi-automated or fully automated driving mode. US patent application US 2019/0324451 A1 discloses a concept where an automation level is adjusted based on the surrounding traffic. In German patent application DE 10 2018 128 892 A1, a level of automation of a second vehicle can be adapted based on the actions of a first vehicle.

In international patent application WO 2019/185217 A1, information about advanced driver assistance features being supported by a vehicle is transmitted from one vehicle to another, which enables the latter vehicle to have a greater understanding of a driving behavior of the former vehicle, enabling the latter vehicle to make adjustments to its speed or direction to avoid a collision with the former vehicle. In US 2015/0149019 A1, a vehicle uses a signal transmitted by another vehicle to determine that the latter vehicle is at least semi-autonomously operated. In this case, the former vehicles takes action to autonomously operate the former vehicle.

In DE 2017 222874 A1, a vehicle receives a message from another vehicle, with the message indicating an autonomous driving system being used, e.g., a version or manufacturer therefore, which enables the former vehicle to predict driving actions of the former vehicle, and to initiate a driving maneuver thereupon. In US 2018/335785 A1, a vehicle predicts the behavior of another vehicle, e.g., based on whether the other vehicle is operated autonomously or not, and adapts its autonomous or semi-autonomous control in response to the predicted behavior.

The AVs are able to communicate via the network or even through direct communication with each other or with infrastructure. This enables the AVs to use cooperation in order to increase safety and efficiency.

There may be a desire to provide an improved concept for automated vehicles, which considers the different driving behaviors of the vehicles.

This desire is addressed by the subject-matter of the independent claims.

Embodiments are based on the finding that autonomously or semi-autonomously operated vehicles (also denoted automated vehicles, AVs, as introduced above) behave differently compared to human-driven vehicles. For example, vehicles may behave differently depending on their level of automation. In addition to different levels of automation, different software versions with distinct features are used by the AVs. Consequently, among a group of AVs, the automation level, available features, and software versions of the automated operation may be distinct, leading to different driving behaviors of different AVs. Such different driving behaviors may complicate the operation or co-operation of AVs, as these different AVs share the road and potentially cooperate with each other. To enable or improve a prediction, by an AV, of a driving behavior of other AVs, the AV may receive wireless messages from the other AVs, which indicate the automation capabilities of said other AVs (which may in turn depend on the level of automation, software version, available features, driving scenario etc.). This information may be used by the AV, to enable cooperation, improve the AVs perception and to enable predicting the behavior of other vehicles. Consequently, the automation capabilities that are broadcast by the other AVs are used, by the AV, to predict the driving behavior of said other AVs, and, eventually, to adjust the automated/at least semi-autonomous operation of the AV.

Various embodiments of the present disclosure provide a method for a first vehicle. The method is suitable for adjusting an at least semi-autonomous operation of the first vehicle based on a prediction of a driving behavior of one or more second vehicles. The first and the one or more second vehicles are at least semi-autonomously operated vehicles (also denoted "automated vehicles, or AVs, in the context of the present disclosure. The method comprises receiving one or more wireless messages from the one or more second vehicles. The one or more wireless messages comprise information on one or more automation capabilities the one or more second vehicles are capable of. The method comprises predicting the driving behavior of the one or more second vehicles based on the information on the one or more automation capabilities the one or more second vehicles are capable of. The method comprises adjusting the at least semi-autonomous operation of the first vehicle based on the prediction of the driving behavior of the one or more second vehicles. Receiving the information on the automation capabilities of the second vehicle may enable or improve the prediction of the driving behavior of the second vehicles, which may in turn lead to suitable adjustments of the automated driving of the first vehicle.

In addition to the information on the automation capabilities, various other pieces of information may be used to convey more accurately the likely driving behavior of the second vehicles.

For example, the one or more wireless messages may (further) comprise information on a manufacturer and a version of the one or more automation capabilities the one or more second vehicles are capable of. Accordingly, the driving behavior of the one or more second vehicles may be predicted based on the information on the manufacturer and the version of the one or more automation capabilities the one or more second vehicles are capable of. The behavior of the automated driving of the second vehicles may also depend on the manufacturer and/or a software version of the automation capabilities, as different manufacturers may implement slightly different driving behaviors, which may also evolve over time.

The one or more wireless messages may (further) comprise information on a maximal automation level and/or on a currently applied automation level of the one or more second vehicles. The driving behavior of the one or more second vehicles may be predicted based on the information on the maximal automation level and/or on the currently applied automation level of the one or more second vehicles. As pointed out above, automated vehicles may behave differently depending on their level of automation.

In addition to autonomous operation, possible cooperation between vehicles may also influence their driving behavior. The one or more wireless messages comprise information on one or more cooperation capabilities the one or more second vehicles are capable of and information on one or more cooperative driving maneuvers currently executed by the one or more second vehicles. The driving behavior of the one or more second vehicles is predicted based on the information on the one or more cooperation capabilities the one or more second vehicles are capable of and the information on the one or more cooperative driving maneuvers currently executed by the one or more second vehicles. By considering possible or actually executed cooperative driving maneuvers, the prediction of the driving behavior may be improved.

Some vehicles have different performance modes, such as an "economy mode" that prioritizes energy use, a "comfort mode" that seeks to reduce abrupt movements, or a "sport mode" that aims at improving the acceleration behavior of the vehicle. These performance modes may also have an influence on the driving behavior of the second vehicles. For example, the one or more wireless messages may comprise information on a driving performance setting currently used by the one or more second vehicles. The driving behavior of the one or more second vehicles may be predicted based on the information on the driving performance setting currently used by the one or more second vehicles.

In some scenarios, vehicles may also broadcast their driving intention to other vehicles, e.g. in order to initiate a cooperative driving behavior. For example, the one or more wireless messages may comprise information on a driving intention of the one or more second vehicles. The driving behavior of the one or more second vehicles may be predicted based on the information on the driving intention of the one or more second vehicles. For example, knowledge of the intended driving behaviors may improve the prediction of the driving behavior of the one or more second vehicles.

There are various aspects of the at least semi-autonomous operation of the first vehicle that can be adjusted based on the predicted driving behavior. For example, adjusting the at least semi-autonomous operation of the first vehicle may comprise adjusting a currently applied automation level of the first vehicle. For example, depending on the predicted driving behavior of the one or more second vehicles, different levels of automation may be possible.

In some cases, overall driving safety may be improved if some or all vehicles concerned operate at the same level of automation. The method may comprise determining a common automation level that is suitable for use by the first vehicle and at least a subset of the one or more second vehicles based on the predicted driving behavior of the one or more second vehicles. The method may comprise transmitting information on the determined common automation level to at least the subset of the one or more second vehicles.

In some embodiments, adjusting the at least semi-autonomous operation of the first vehicle may comprise selecting at least one vehicle of the one or more second vehicle to contact in order to perform a coordinated driving maneuver. The method may comprise transmitting a cooperation message to the selected at least one vehicle. For example, based on the predicted driving behavior of the other vehicles, vehicles can be identified that are suitable for cooperation, e.g. as the predicted driving behavior can be suitably combined with the driving behavior of the first vehicle.

In various embodiments, adjusting the at least semi-autonomous operation of the first vehicle may comprise adjusting one of a velocity of the first vehicle and a minimal distance of the first vehicle relative to the one or more second vehicles. Depending on the predicted driving behavior of the one or more second vehicles, a higher or lower velocity, and/or a higher or lower minimal distance may be advisable, e.g. to take possible erratic driving behavior into consideration due to a likely change of automation level of one of the one or more second vehicles.

The information is received from the one or more second vehicle via the one or more wireless messages. For example, the one or more wireless messages may be cooperative awareness messages, CAMs. In other words, the information that is used for predicting the driving behavior of the one or more second vehicles may be included within the CAMs. Alternatively, separate messages may be used. In other words, the one or more wireless messages may be wireless messages that are received in addition to the cooperative awareness messages from the one or more second vehicles.

In addition to receiving said wireless messages, the first vehicle may also broadcast its own information on its automation capabilities. In other words, the method may comprise transmitting a wireless message to the one or more second vehicles, the wireless message comprising information on one or more automation capabilities the first vehicle is capable of. For example, the wireless message may further comprise one or more of information on a manufacturer of the one or more automation capabilities the first vehicle is capable of, information on a version of the one or more automation capabilities the first vehicle is capable of, information on a maximal automation level of the first vehicle, information on a currently applied automation level of the first vehicle, information on one or more cooperation capabilities the first vehicle is capable of, information on one or more cooperative driving maneuvers currently executed by the first vehicle, information on a driving performance setting currently used by the first vehicle, and information on a driving intention of the first vehicle. Consequently, said information may be transmitted to the second vehicles, and used by the second vehicles to predict the driving behavior of the first vehicle (similar to the prediction being performed by the first vehicle).

Various embodiments of the present disclosure relate to a corresponding apparatus for the first vehicle, suitable for adjusting the at least semi-autonomous operation of the first vehicle based on a prediction of a driving behavior of the one or more second vehicles. The one or more second vehicles are at least semi-autonomously operated vehicles. The apparatus comprises an interface for communicating with the one or more second vehicles. The apparatus comprises a control module, configured to perform the above method.

The wireless message may further comprise one or more of information on a manufacturer of the one or more automation capabilities the vehicle is capable of, information on a version of the one or more automation capabilities the vehicle is capable of, information on a maximal automation level of the vehicle, information on a currently applied automation level of the vehicle, information on one or more cooperation capabilities the vehicle is capable of, information on one or more cooperative driving maneuvers currently executed by the vehicle, information on a driving performance setting currently used by the vehicle, and information on a driving intention of the vehicle. For example, said information may be used by the one or more further vehicles to predict the driving behavior of the vehicle.

Various embodiments of the present disclosure relate to a corresponding apparatus for the at least semi-autonomously operated vehicle. The apparatus comprises an interface for communicating with one or more further vehicles, and a control module, configured to perform the above method.

Various embodiments of the present disclosure relate to a computer program having a program code for performing at least one of the above methods, when the computer program is executed on a computer, a processor, or a programmable hardware component.

Some other features or aspects will be described using the following non-limiting embodiments of apparatuses or methods or computer programs or computer program products by way of example only, and with reference to the accompanying figures, in which:
Figs. 1a and 1b show flow charts of examples of a method for a first vehicle, suitable for adjusting an at least semi-autonomous operation of a first vehicle;
Fig. 1c shows a block diagram of an example of an apparatus for a first vehicle, suitable for adjusting an at least semi-autonomous operation of a first vehicle;
Fig. 1d shows a schematic diagram of an interaction between a first vehicle and a second vehicle;
Fig. 2a shows a flow chart of an example of a method for an at least semi-autonomously operated vehicle; and
Fig. 2b shows a block diagram of an example of an apparatus for an at least semi-autonomously operated vehicle.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

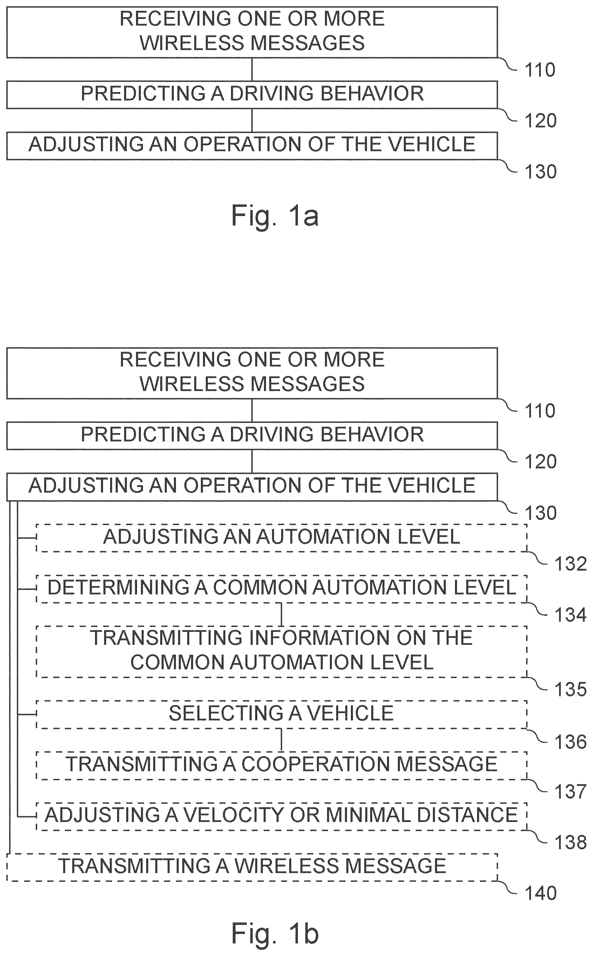

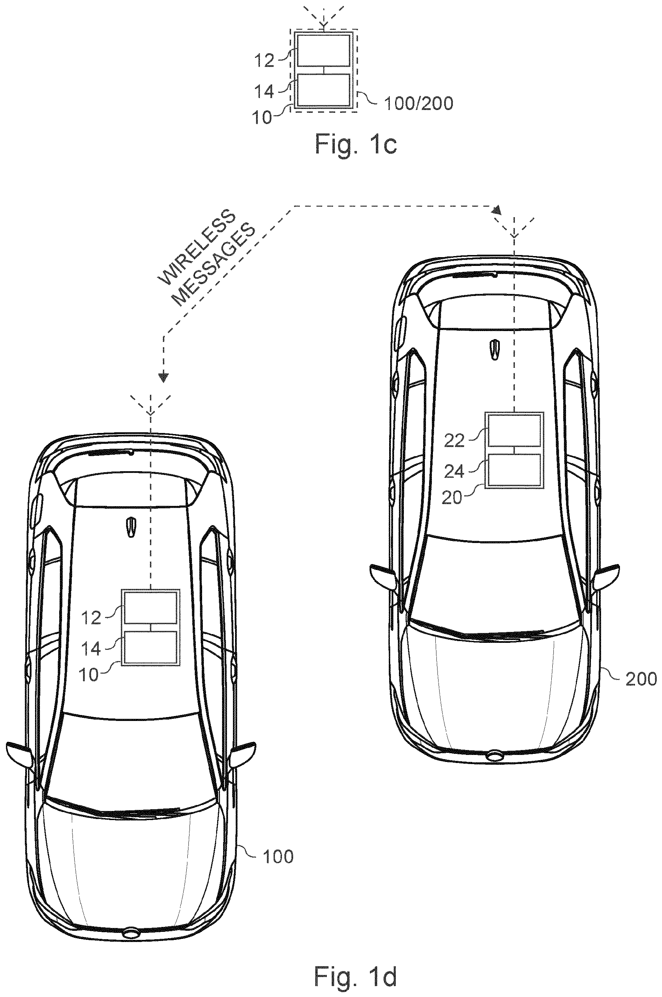

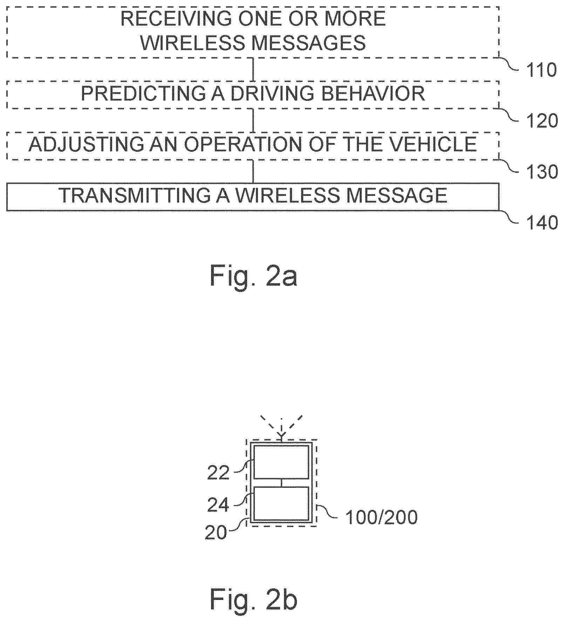

Figs. 1a and 1b show flow charts of examples of a method for a first vehicle 100, suitable for adjusting an at least semi-autonomous operation of the first vehicle based on a prediction of a driving behavior of one or more second vehicles 200 (vehicles 100; 200 are shown in connection with Figs. 1c, 1d and 2b). In general, the method may be performed by the first vehicle, e.g. by an apparatus 10 of the first vehicle 100. In some cases, at least subsets of the methods may also be performed by one of the one or more second vehicles 200, e.g. by an apparatus 20 of the second vehicle 200. On the other hand, the vehicle 100 may alternatively or additionally perform the method shown in connection with Fig. 2a. The one or more second vehicles, and also the first vehicle, are at least semi-autonomously operated vehicles. The method comprises receiving 110 one or more wireless messages from the one or more second vehicles. The one or more wireless messages comprise information on one or more automation capabilities the one or more second vehicles are capable of. The method comprises predicting 120 the driving behavior of the one or more second vehicles based on the information on the one or more automation capabilities the one or more second vehicles are capable of. The method comprises adjusting 130 the at least semi-autonomous operation of the first vehicle based on the prediction of the driving behavior of the one or more second vehicles.

Fig. 1c shows a block diagram of an example of a corresponding apparatus 10 for the first vehicle 100, suitable for adjusting an at least semi-autonomous operation of the first vehicle. The apparatus comprises an interface 12 for communicating with the one or more second vehicles. The apparatus further comprises a control module 14, coupled to the interface 12, and configured to perform the method shown in connection with Figs. 1a and/or 1b.

For a better overview of the scenario, Fig. 1d is provided. Fig. 1d shows a schematic diagram of an interaction between the first vehicle 100 and one of the second vehicles 200. The first vehicle 100 comprises the apparatus 10. The second vehicle 200 comprises an apparatus 20 (e.g. as introduced in connection with Fig. 2b). For example, the apparatus 20 may be implemented similar to the apparatus 10 of Figs. 1c and/or 1d. For example, the vehicle 100, and/or the vehicle 200, may be a land vehicle, a road vehicle, a car, an automobile, an off-road vehicle, a motor vehicle, a truck or a lorry.

The following description relates to the method of Figs. 1a and/or 1b and to the corresponding apparatuses and vehicles of Figs. 1c and/or 1d (and likewise a corresponding computer program). Features introduced in connection with the method may likewise be applied to the corresponding apparatuses/vehicles and/or computer program (and vice versa).

Various embodiments of the present disclose relate to a method, an apparatus and a computer program for a first vehicle, suitable for adjusting an at least semi-autonomous operation of the first vehicle based on a prediction of a driving behavior of one or more second vehicles 200. In this context, the term "at least semi-autonomously operated" indicates that at least one of the sub-systems of the vehicle that are used to control/steer the movement of the vehicle are autonomously operated. For example, according to SAE standard J3016, six levels of automated (or autonomous) driving are distinguished, from level 0 to level 5. The six levels are denoted level 0 (no automation, driver operates the vehicle), level 1 (driver assistance, driver operates the vehicle with the help of assistive systems that provide longitudinal or lateral guidance), level 2 (partial automation, driver assistance systems provide assistance with longitudinal or lateral guidance), level 3 (conditional automation, automated driving with the expectation, that the driver has to resume control in an instance), level 4 (high automation, automated driving without the expectation, that the driver has to resume control in an instance) and level 5 (full automation in any scenario that the driver is also capable of). For example, at least semi-autonomously operated may indicate an automation level of at least level 2 or at least level 3). In the context of the present application, the terms autonomous and automated are used interchangeably. For example, the term "at least semi-autonomously operated" may be understood as "at least partially automated".

The method adjusts the at least semi-autonomous operation of the first vehicle based on the predicted driving behavior of the one or more second vehicles, which are in turn predicted based on the one or more wireless messages received from the one or more second vehicles. For example, the one or more wireless messages may be wireless messages that are periodically transmitted by, and received from, the one or more second vehicles. For example, the one or more wireless messages may be wireless messages that are directly received from the one or more second vehicles, e.g. so-called device-to-device (D2D) and in particular vehicle-to-vehicle (V2V) messages. For example, the one or more wireless messages may be broadcast by the one or more second vehicles, e.g. as D2D/V2V messages. In some cases, the direct communication may be aided by a relay, e.g. a road-side communication relay that rebroadcasts the one or more wireless messages. In this case, the terms D2D or V2V may still apply.

In V2V communication, one wireless message being used to periodically convey information between vehicles is a so-called Cooperative Awareness Message (CAM). For example, the one or more wireless messages may be cooperative awareness messages. CAMs include a position, a heading, a vehicle type, a timestamp etc. of the vehicle transmitting the CAM. In addition, the CAMs may now include the various pieces of information attributed to the one or more wireless messages in the context of the present disclosure. Alternatively (or additionally), the one or more wireless messages may be wireless messages that are received in addition to the cooperative awareness messages from the one or more second vehicles. For example, a mixed scenario may be used, wherein some pieces of information are included in the CAMs, and some information is transmitted via additional wireless messages.

As pointed out before, the one or more wireless messages include various pieces of information that can be useful in predicting the driving behavior of the one or more second vehicles. In particular, the one or more wireless messages comprise the information on the one or more automation capabilities the one or more second vehicles are capable of. Likewise, the driving behavior of the one or more second vehicles are predicted based on the information on the one or more automation capabilities the one or more second vehicles are capable of. For example, the information on the one or more automation capabilities the one or more second vehicles are capable of may indicate, which automation capabilities are available, or being used, for the at least semi-autonomous operation of the one or more vehicles. For example, the information on the one or more automation capabilities the one or more second vehicles are capable of may comprise a bit vector indicating for each of a set of pre-defined automation capabilities whether the respective second vehicle is capable of performing said automation capabilities (e.g. currently or in general). Alternatively, the information on the one or more automation capabilities the one or more second vehicles are capable of may include a listing of the automation capabilities that the respective second vehicle is capable of.

In some cases, the information on the one or more automation capabilities the one or more second vehicles are capable of may be derived from other information, e.g. a manufacturer of the second vehicle, a software version of the respective automation capabilities, and/or a level of automation of the second vehicle. For example, to achieve a given level of automation, a vehicle by a given manufacturer may provide a set of required capabilities (and optionally also a set of optional capabilities). These sets of required (or optional) capabilities may change over time, so that, for example, a vehicle (by a manufacturer) capable of semi-autonomous operation on level 3 in 2020 has different capabilities than a vehicle capable of semi-autonomous operation on level 3 in 2025. Therefore, the manufacturer, software version and/or level of automation may be used to determine which set of required capabilities applies. Consequently, the one or more wireless messages may comprise information on a manufacturer and a version of the one or more automation capabilities the one or more second vehicles are capable of. Additionally or alternatively, the one or more wireless messages comprise information on a maximal automation level and/or on a currently applied automation level of the one or more second vehicles. Consequently, the driving behavior of the one or more second vehicles may be predicted based on the information on the manufacturer and the version of the one or more automation capabilities the one or more second vehicles are capable of and/or based on the information on the maximal automation level and/or on the currently applied automation level of the one or more second vehicles. For example, the information on the manufacturer and the version of the one or more automation capabilities the one or more second vehicles are capable of and/or the information on the maximal automation level and/or on the currently applied automation level of the one or more second vehicles may include or indicate the information on the one or more automation capabilities the one or more second vehicles are capable of. In this context, the first vehicle may distinguish between automation capabilities that are available "in general", and automation capabilities that are currently being used, e.g. based on the currently used level of automation.

Another factor in determining the likely driving behavior of the one or more second vehicles is a "performance mode" the one or more second vehicles are driven in. For example, the "performance mode" or "driving performance setting" may be one of a "sport mode/sport driving performance setting", which may include a more intense acceleration, a "comfort mode/driving performance setting", which may guide the operation of the vehicle towards fewer abrupt movements, an "economy mode/driving performance setting", which may reduce an energy use of the respective second vehicle, or a "balanced mode". Depending on the driving performance setting, the driving behavior of the respective second vehicle may vary, and the prediction of the driving behavior may be adjusted accordingly. In other words, the one or more wireless messages may comprise information on a driving performance setting currently used by the one or more second vehicles. For example, the information on a driving performance setting currently used by the one or more second vehicles may indicate which driving performance setting is currently being used by the respective second vehicle. The driving behavior of the one or more second vehicles may be predicted based on the information on the driving performance setting currently used by the one or more second vehicles.

Another factor is the actual driving intention of the respective second vehicles. In many cases, the driving intention of the one or more second vehicles can be derived (by the first vehicle) base on their position, velocity and heading that is included in the CAM received from the respective vehicle, and used to predict the driving behavior of the one or more second vehicles. In some cases, however, information on the driving intention may be included in the one or more wireless messages. For example, the one or more wireless messages may comprise information on a driving intention of the one or more second vehicles. The driving behavior of the one or more second vehicles may be predicted based on the information on the driving intention of the one or more second vehicles. For example, the information on the driving intention may be received as part of a cooperation request, or independent of any planned cooperation of the respective second vehicle.

As pointed out above, the behavior of the one or more second vehicles may also depend on possible cooperation between vehicles. For example, at an intersection, cooperation between vehicles may be used to perform a "convoy start", where the vehicles being queued at the intersection start simultaneously and in a coordinated manner. Such cooperation capabilities (and actual cooperation being performed), or lack thereof, have a major influence on the driving behavior of the respective vehicles, leading to an adjustment of the predicted driving behavior of the one or more second vehicles. For example, the one or more wireless messages may comprise information on one or more cooperation capabilities the one or more second vehicles are capable of and/or information on one or more cooperative driving maneuvers currently executed by the one or more second vehicles. The driving behavior of the one or more second vehicles may be predicted based on the information on the one or more cooperation capabilities the one or more second vehicles are capable of and/or the information on the one or more cooperative driving maneuvers currently executed by the one or more second vehicles.

In the above description, merely the abstract term "adjusting 130 the at least semi-autonomous operation of the first vehicle based on the prediction of the driving behavior of the one or more second vehicles" has been used. In practice, various aspects of the at least semi-autonomous operation of the first vehicle may be adjusted. In this context, the term "at least semi-autonomous operation of the first vehicle" may indicate that the operation of the first vehicle being adjusted relates to the operation, and thus movement, of the first vehicle. For example, the prediction of the driving behavior of the one or more second vehicles may be used to adjust how the first vehicle moves in at least semi-autonomous operation. In some cases, the prediction of the driving behavior may be used to cease the at least semi-autonomous operation altogether, yielding control of the vehicle to the driver of the vehicle.

For example, adjusting the at least semi-autonomous operation of the first vehicle may comprise adjusting 138 one of a velocity of the first vehicle and a minimal distance of the first vehicle relative to the one or more second vehicles. Both parameters may be based on how predictable, and/or abrupt, the movement of the one or more second vehicles are predicted to be. In scenarios where the movement of the one or more second vehicles is predicated with a high degree of certainty (e.g. on a near-empty highway), a higher velocity and/or a smaller minimal distance may be chosen.

Another factor that can be adjusted, as hinted above, the level of automation being used by the first vehicle. For example, based on how predictable, and/or abrupt, the movement of the one or more second vehicles are predicted to be, different levels of automation may be chosen. In other words, adjusting the at least semi-autonomous operation of the first vehicle comprises adjusting 132 a currently applied automation level of the first vehicle. For example, in an ambiguous scenario, a lower level of automation may be chosen (e.g. level 3), and the driver may be warned that they may be required to take over control on short notice. As this automation level may also apply to other vehicles, the determined automation level may be shared among the vehicles occupying the same (or adjacent) portions of the road. For example, the method may comprise determining 134 a common automation level that is suitable for use by the first vehicle and at least a subset of the one or more second vehicles based on the predicted driving behavior of the one or more second vehicles, and transmitting 135 information on the determined common automation level to at least the subset of the one or more second vehicles. For example, the common automation level may be determined similar to the currently applied automation level of the first vehicle, e.g. based on how predictable and/or ambiguous the driving of the one or more second vehicles is.

Finally, the adjustment of the at least semi-autonomous operation of the first vehicle may be related to cooperation being performed between the first vehicle and the one or more second vehicles. For example, adjusting the at least semi-autonomous operation of the first vehicle may comprise selecting 136 at least one vehicle of the one or more second vehicle to contact in order to perform a coordinated driving maneuver, and transmitting 137 a cooperation message to the selected at least one vehicle. For example, the predicted driving behavior, and/or the cooperation capabilities included in the one or more wireless messages may be used to identify a vehicle among the one or more second vehicles that is suitable for cooperation with the first vehicle.

As has been pointed out above, the first vehicle may be both recipient and transmitter of wireless messages. Indeed, the same type of wireless message received by the first vehicle may also be transmitted from the first vehicle to the one or more second vehicles. Accordingly, the method may comprise transmitting (e.g. broadcasting) a wireless message 140 to the one or more second vehicles, the wireless message comprising information on one or more automation capabilities the first vehicle is capable of. For example, the wireless message transmitted by the first vehicle may comprise one or more of information on a manufacturer of the one or more automation capabilities the first vehicle is capable of, information on a version of the one or more automation capabilities the first vehicle is capable of, information on a maximal automation level of the first vehicle, information on a currently applied automation level of the first vehicle, information on one or more cooperation capabilities the first vehicle is capable of, information on one or more cooperative driving maneuvers currently executed by the first vehicle, information on a driving performance setting currently used by the first vehicle, and information on a driving intention of the first vehicle.

In various embodiments, the interface 12 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The interface 12 may comprise further components to enable according communication in the mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The interface 12 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the interface 12 may serve the purpose of transmitting or receiving or both, transmitting and receiving, information, such as information, input data, control information, further information messages, etc.

As shown in Figs. 1c and 1d, the respective interface 12 is coupled to the respective control module 14 at the apparatus 10. For example, the control module 14 may be implemented using one or more processing units, one or more processing devices, one or more processors, any means for processing, such as a processor, a computer or a programmable hardware component being operable with accordingly adapted software. In other words, the described functions of the control module 14 may as well be implemented in software, which is then executed on one or more programmable hardware components. Such hardware components may comprise a general-purpose processor, a Digital Signal Processor (DSP), a micro-controller, etc.

In embodiments, communication, i.e. transmission, reception or both, may take place among apparatuses 10 / 20 or vehicles 100 / 200 directly. Such communication may make use of a mobile communication system. Such communication may be carried out directly, e.g. by means of Device-to-Device (D2D) communication. Such communication may be carried out using the specifications of a mobile communication system. An example of D2D is direct communication between vehicles, also referred to as Vehicle-to-Vehicle communication (V2V), car-to-car, Dedicated Short Range Communication (DSRC), respectively. Technologies enabling such D2D-communication include 802.11p, 3GPP systems (4G, 5G, NR and beyond), etc.

In embodiments, the interface 12 can be configured to wirelessly communicate in the mobile communication system. In order to do so radio resources are used, e.g. frequency, time, code, and/or spatial resources, which may be used for wireless communication with a base station transceiver as well as for direct communication. The assignment of the radio resources may be controlled by a base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc. For example, in direct Cellular Vehicle-to-Anything (C-V2X), where V2X includes at least V2V, V2-Infrastructure (V2I), etc., transmission according to 3GPP Release 14 onward can be managed by infrastructure (so-called mode 3) or run in a UE.

More details and aspects of the method, apparatus, vehicle and computer program are mentioned in connection with the proposed concept or one or more examples described above or below (e.g. Fig. 2a to 2b). The method, apparatus, vehicle and computer program may comprise one or more additional optional features corresponding to one or more aspects of the proposed concept or one or more examples described above or below.

Fig. 2a shows a flow chart of an example of a method for an at least semi-autonomously operated vehicle 100; 200. For example, the method may be performed by the vehicle 100; 200.

The method comprises transmitting 140 a wireless message to one or more further vehicles 100; 200 (e.g. the first vehicle or one or more second vehicles) of Figs. 1a to 1c. Fig. 2b shows a block diagram of an example of a corresponding apparatus 20 for the at least semi-autonomously operated vehicle. The apparatus may comprise an interface 22 for communicating with one or more further vehicles, and a control module 24, configured to perform the method of Fig. 2a and/or the method of Fig. 1a and/or 1b. The control module 24 is coupled to the interface 22.

For example, the wireless message may correspond to one of the one or more wireless messages introduced in connection with Figs. 1a to 1d. Consequently, the wireless message comprises information on one or more automation capabilities the vehicle is capable of. The wireless message may comprise one or more of information on a manufacturer of the one or more automation capabilities the vehicle is capable of, information on a version of the one or more automation capabilities the vehicle is capable of, information on a maximal automation level of the vehicle, information on a currently applied automation level of the vehicle, information on one or more cooperation capabilities the vehicle is capable of, information on one or more cooperative driving maneuvers currently executed by the vehicle, information on a driving performance setting currently used by the vehicle, and information on a driving intention of the vehicle. For example, the vehicle may be one of the one or more second vehicles 200 of Figs. 1a to 1d, or the first vehicle of Figs. 1a to 1d. Accordingly, the vehicle may also be configured to perform the method of Fig. 1a and/or 1b, and the apparatus 20 may be implemented similar to the apparatus 10 of Fig. 1c and/or 1d. However, in some cases, some of the features of the method and apparatus of Figs. 1a to 1d may be optional for the method and/or apparatus of Figs. 2a to 2b.

In various embodiments, the interface 22 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The interface 22 may comprise further components to enable according communication in the mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The interface 22 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the interface 22 may serve the purpose of transmitting or receiving or both, transmitting and receiving, information, such as information, input data, control information, further information messages, etc.

As shown in Fig. 2b, the respective interface 22 is coupled to the respective control module 24 at the apparatus 10. For example, the control module 24 may be implemented using one or more processing units, one or more processing devices, one or more processors, any means for processing, such as a processor, a computer or a programmable hardware component being operable with accordingly adapted software. In other words, the described functions of the control module 24 may as well be implemented in software, which is then executed on one or more programmable hardware components. Such hardware components may comprise a general-purpose processor, a Digital Signal Processor (DSP), a micro-controller, etc.

In embodiments, communication, i.e. transmission, reception or both, may take place among apparatuses 10 / 20 or vehicles 100 / 200 directly. Such communication may make use of a mobile communication system. Such communication may be carried out directly, e.g. by means of Device-to-Device (D2D) communication. Such communication may be carried out using the specifications of a mobile communication system. An example of D2D is direct communication between vehicles, also referred to as Vehicle-to-Vehicle communication (V2V), car-to-car, Dedicated Short Range Communication (DSRC), respectively. Technologies enabling such D2D-communication include 802.11p, 3GPP systems (4G, 5G, NR and beyond), etc.

In embodiments, the interface 22 can be configured to wirelessly communicate in the mobile communication system. In order to do so radio resources are used, e.g. frequency, time, code, and/or spatial resources, which may be used for wireless communication with a base station transceiver as well as for direct communication. The assignment of the radio resources may be controlled by a base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc. For example, in direct Cellular Vehicle-to-Anything (C-V2X), where V2X includes at least V2V, V2-Infrastructure (V2I), etc., transmission according to 3GPP Release 24 onward can be managed by infrastructure (so-called mode 3) or run in a UE.

More details and aspects of the method, apparatus, vehicle and computer program are mentioned in connection with the proposed concept or one or more examples described above or below (e.g. Fig. 1a to 1d). The method, apparatus, vehicle and computer program may comprise one or more additional optional features corresponding to one or more aspects of the proposed concept or one or more examples described above or below.

Various embodiments of the present disclosure relate to an automation level and/or cooperation broadcast message. For example, the automation level and/or cooperation broadcast message may correspond to the wireless message(s) introduced in connection with Figs. 1a to 2b. As has been pointed out above, various kinds of information may be shared by an AV (e.g., second vehicles and/or first vehicles) to facilitate prediction of the driving behavior of the AV by other AVs (e.g., the first vehicle). AVs may share this information via direct communication through a broadcast message, for example. For example, the information may be transmitted as a new broadcast message or it might be contained within an existing vehicular broadcast message as, e.g. Cooperative Awareness Message (CAM). In some scenarios, the information may be distributed via road-side infrastructure (which may be used as a relay).

The automation & cooperation broadcast message may contain one or more of the following features: AV level (automation capabilities), such as the SAE level and/or the software version, cooperation capabilities, AV features, AV status and action (e.g. a maneuver currently performed by the AV, such as AV is parking, turning, etc.), a timestamp, an ID of the vehicle itself and model (type, dimensions), and a position of the vehicle itself.

For example, an AV A may determine the possible automation level and cooperation even if it is not using it, e.g. by predicting the driving behavior of other AVs, adjusting the level of automation of AV A, and/or cooperating with the other AVs.

AV A may share its automation related information, such as its SAE level (for example), software version, automation features/capabilities, and/or an estimation of a possible automation level. For example, a visual notification of the possible automation level may be provided to a driver of the vehicle, e.g. as a warning, so the driver can take over operation of the vehicle. In some cases, different modes (sport, comfort) may be considered.

For example, AV A (or the other AVs) may share their cooperation related information, such as cooperation capabilities (platooning, maneuver coordination), or detected possible cooperation.

For example, AV A may share its status and actions (e.g. what is the vehicle doing in a) and/or b), i.e. status of automation or cooperation. Other entities, e.g. vehicles receiving one of the above pieces of information from AV A, may use said information to predict the behavior of AV A, adapt their behavior based on AV A, and/or evaluate whether cooperation is possible.

In the following, some examples are given. In a first example, a convoy start is performed at a traffic light (as a cooperation example). A first AV may queue with other vehicles (e.g. AVs) on front of a traffic light. The (e.g. all of the) AVs may share their automation & cooperation broadcast message. The first AV can verify if the vehicle(s) in front of it is/are able to support a convoy start (cooperation capabilities) in order to improve the fuel and traffic flow efficiency.

In a second example, AV driving mode adaptation is performed (as a cooperation example). A first AV drives on a street with other vehicles (AVs). The (e.g. all of the) AVs are sharing their automation & cooperation broadcast message. The first AV can verify if the vehicle(s) in its surrounding are driving with a distinct automation methods and then adapt its own driving behavior to it to increase fuel and traffic flow efficiency.

In a third example, an initiation of any kind of cooperation is performed (as a cooperation example). A first AV drives on a street with other vehicles (e.g. AVs). The (e.g. all of the) AVs are sharing their automation & cooperation broadcast message. The first AV can verify if other vehicle(s) providing any kind of cooperation and it may initiate a certain kind of cooperation if needed.

For example, AV A may correspond to one of the second vehicles and/or to the first vehicle introduced in connection with Figs. 1a to 1c, and the "other" AVs (e.g. the first AV) may correspond to the first vehicle introduced in connection with Figs. 1a to 1c.

More details and aspects of the automation level and/or cooperation broadcast message are mentioned in connection with the proposed concept or one or more examples described above or below (e.g. Fig. 1a to 2b). The automation level and/or cooperation broadcast message may comprise one or more additional optional features corresponding to one or more aspects of the proposed concept or one or more examples described above or below.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein. A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within the scope defined by the claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

### List of reference signs

- 10: Apparatus
- 12: Interface
- 14: Control module
- 20: Apparatus
- 22: Interface
- 24: Control module
- 100: First vehicle
- 110: Receiving one or more wireless messages
- 120: Predicting a driving behavior
- 130: Adjusting an operation of the vehicle
- 132: Adjusting an automation level
- 134: Determining a common automation level
- 135: Transmitting information on the common automation level
- 136: Selecting a vehicle for cooperation
- 137: Transmitting a cooperation message
- 138: Adjusting a velocity and/or minimal distance
- 140: Transmitting a wireless message
- 200: Second vehicle

## Claims

1. A method for a first vehicle (100), suitable for adjusting an at least semi-autonomous operation of the first vehicle based on a prediction of a driving behavior of one or more second vehicles (200), the one or more second vehicles being at least semi-autonomously operated vehicles, the method comprising:
receiving (110) one or more wireless messages from the one or more second vehicles,
the one or more wireless messages comprising information on one or more automation capabilities the one or more second vehicles are capable of;
predicting (120) the driving behavior of the one or more second vehicles based on the information on the one or more automation capabilities the one or more second vehicles are capable of; and
adjusting (130) the at least semi-autonomous operation of the first vehicle based on the prediction of the driving behavior of the one or more second vehicles,
**characterised in that**
the one or more wireless messages comprise information on one or more cooperation capabilities the one or more second vehicles are capable of and information on one or more cooperative driving maneuvers currently executed by the one or more second vehicles, wherein the driving behavior of the one or more second vehicles is predicted based on the information on the one or more cooperation capabilities the one or more second vehicles are capable of and the information on the one or more cooperative driving maneuvers currently executed by the one or more second vehicles.

2. The method according to claim 1, wherein the one or more wireless messages comprise information on a manufacturer and a version of the one or more automation capabilities the one or more second vehicles are capable of, wherein the driving behavior of the one or more second vehicles is predicted based on the information on the manufacturer and the version of the one or more automation capabilities the one or more second vehicles are capable of.

3. The method according to one of the claims 1 to 2, wherein the one or more wireless messages comprise information on a maximal automation level and/or on a currently applied automation level of the one or more second vehicles, wherein the driving behavior of the one or more second vehicles is predicted based on the information on the maximal automation level and/or on the currently applied automation level of the one or more second vehicles.

4. The method according to one of the claims 1 to 3, wherein the one or more wireless messages comprise information on a driving performance setting currently used by the one or more second vehicles, wherein the driving behavior of the one or more second vehicles is predicted based on the information on the driving performance setting currently used by the one or more second vehicles.

5. The method according to one of the claims 1 to 4, wherein the one or more wireless messages comprise information on a driving intention of the one or more second vehicles, wherein the driving behavior of the one or more second vehicles is predicted based on the information on the driving intention of the one or more second vehicles.

6. The method according to one of the claims 1 to 5, wherein adjusting the at least semi-autonomous operation of the first vehicle comprises adjusting (132) a currently applied automation level of the first vehicle.

7. The method according to claim 6, comprising determining (134) a common automation level that is suitable for use by the first vehicle and at least a subset of the one or more second vehicles based on the predicted driving behavior of the one or more second vehicles, and transmitting (135) information on the determined common automation level to at least the subset of the one or more second vehicles.

8. The method according to one of the claims 1 to 7, wherein adjusting the at least semi-autonomous operation of the first vehicle comprises selecting (136) at least one vehicle of the one or more second vehicle to contact in order to perform a coordinated driving maneuver, and transmitting (137) a cooperation message to the selected at least one vehicle.

9. The method according to one of the claims 1 to 8, wherein adjusting the at least semi-autonomous operation of the first vehicle comprises adjusting (138) one of a velocity of the first vehicle and a minimal distance of the first vehicle relative to the one or more second vehicles.

10. The method according to one of the claims 1 to 9, wherein the one or more wireless messages are cooperative awareness messages, CAMs, or wherein the one or more wireless messages are wireless messages that are received in addition to the cooperative awareness messages from the one or more second vehicles.

11. The method according to one of the claims 1 to 10, comprising transmitting a wireless message (140) to the one or more second vehicles, the wireless message comprising information on one or more automation capabilities the first vehicle is capable of.

12. A computer program having a program code for performing the method according to one of the claims 1 to 11, when the computer program is executed on a computer, a processor, or a programmable hardware component.

13. An apparatus (10; 20) for an at least semi-autonomously operated vehicle (100; 200), the apparatus comprising:
an interface (12; 22) for communicating with one or more further vehicles (100; 200); and
a control module (14; 24), configured to perform the method according to one of the claims 1 to 11.

## Patentansprüche

1. Verfahren für ein erstes Fahrzeug (100), das zum Anpassen eines mindestens halbautonomen Betriebs des ersten Fahrzeugs basierend auf einer Vorhersage eines Fahrverhaltens eines oder mehrerer zweiter Fahrzeuge (200) geeignet ist, wobei das eine oder die mehreren zweiten Fahrzeuge mindestens halbautonom betriebene Fahrzeuge sind, das Verfahren umfassend:
Empfangen (110) von einer oder mehreren drahtlosen Nachrichten von dem einen oder den mehreren zweiten Fahrzeugen,
die eine oder die mehreren drahtlosen Nachrichten, umfassend Informationen über eine oder mehrere Automatisierungsfähigkeiten, zu denen das eine oder die mehreren zweiten Fahrzeuge in der Lage sind;
Vorhersagen (120) des Fahrverhaltens des einen oder der mehreren zweiten Fahrzeuge basierend auf den Informationen über die eine oder die mehreren Automatisierungsfähigkeiten, zu denen das eine oder die mehreren zweiten Fahrzeuge in der Lage sind; und
Anpassen (130) des mindestens halbautonomen Betriebs des ersten Fahrzeugs basierend auf der Vorhersage des Fahrverhaltens des einen oder der mehreren zweiten Fahrzeuge, **dadurch gekennzeichnet, dass** die eine oder die mehreren drahtlosen Nachrichten Informationen über eine oder mehrere Kooperationsfähigkeiten, zu denen das eine oder die mehreren zweiten Fahrzeuge in der Lage sind, und Informationen über ein oder mehrere kooperative Fahrmanöver, die aktuell durch das eine oder die mehreren zweiten Fahrzeugen ausgeführt werden, umfasst, wobei das Fahrverhalten des einen oder der mehreren zweiten Fahrzeuge basierend auf den Informationen über die einen oder die mehreren Kooperationsfähigkeiten, zu denen das eine oder die mehreren zweiten Fahrzeuge in der Lage sind, und den Informationen über das eine oder die mehreren kooperativen Fahrmanöver, die aktuell durch das eine oder den mehreren zweiten Fahrzeugen ausgeführt werden, vorhergesagt wird.

2. Verfahren nach Anspruch 1, wobei die eine oder mehreren drahtlosen Nachrichten Informationen über einen Hersteller und eine Version der einen oder der mehreren Automatisierungsfähigkeiten umfassen, zu denen das eine oder die mehreren zweiten Fahrzeuge in der Lage sind, wobei das Fahrverhalten des einen oder der mehreren zweiten Fahrzeuge basierend auf den Informationen über den Hersteller und die Version der einen oder der mehreren Automatisierungsfähigkeiten, zu denen das eine oder die mehreren zweiten Fahrzeuge in der Lage sind, vorhergesagt wird.

3. Verfahren nach einem der Ansprüche 1 bis 2, wobei die eine oder die mehreren drahtlosen Nachrichten Informationen über einen maximalen Automatisierungsgrad und/oder über einen aktuell angewandten Automatisierungsgrad des einen oder der mehreren zweiten Fahrzeuge umfassen, wobei das Fahrverhalten des einen oder der mehreren zweiten Fahrzeuge basierend auf den Informationen über den maximalen Automatisierungsgrad und/oder über den aktuell angewandten Automatisierungsgrad des einen oder der mehreren zweiten Fahrzeuge vorhergesagt wird.

4. Verfahren nach einem der Ansprüche 1 bis 3, wobei die eine oder die mehreren drahtlosen Nachrichten Informationen über eine Fahrleistungseinstellung, die aktuell durch das eine oder die mehreren zweiten Fahrzeugen verwendet werden, umfassen, wobei das Fahrverhalten des einen oder der mehreren zweiten Fahrzeuge basierend auf den Informationen über die Fahrleistungseinstellung, die aktuell durch das eine oder die mehreren zweiten Fahrzeugen verwendet werden, vorhergesagt wird.

5. Verfahren nach einem der Ansprüche 1 bis 4, wobei die eine oder mehreren drahtlosen Nachrichten Informationen über eine Fahrabsicht des einen oder der mehreren zweiten Fahrzeuge umfassen, wobei das Fahrverhalten des einen oder der mehreren zweiten Fahrzeuge basierend auf den Informationen über die Fahrabsicht des einen oder der mehreren zweiten Fahrzeuge vorhergesagt wird.

6. Verfahren nach einem der Ansprüche 1 bis 5, wobei das Anpassen des mindestens halbautonomen Betriebs des ersten Fahrzeugs das Anpassen (132) eines aktuell angewandten Automatisierungsgrads des ersten Fahrzeugs umfasst.

7. Verfahren nach Anspruch 6, umfassend das Bestimmen (134) eines gemeinsamen Automatisierungsgrads, der für die Verwendung durch das erste Fahrzeug und mindestens eine Teilmenge des einen oder der mehreren zweiten Fahrzeuge geeignet ist, basierend auf dem vorhergesagten Fahrverhalten des einen oder der mehreren zweiten Fahrzeuge und das Übertragen (135) von Informationen über den bestimmten gemeinsamen Automatisierungsgrad an mindestens die Teilmenge des einen oder der mehreren zweiten Fahrzeuge.

8. Verfahren nach einem der Ansprüche 1 bis 7, wobei das Anpassen des mindestens halbautonomen Betriebs des ersten Fahrzeugs das Auswählen (136) mindestens eines Fahrzeugs des einen oder der mehreren zweiten zu kontaktierenden Fahrzeuge, um ein koordiniertes Fahrmanöver durchzuführen, und das Übertragen (137) einer Kooperationsnachricht an das ausgewählte mindestens eine Fahrzeug umfasst.

9. Verfahren nach einem der Ansprüche 1 bis 8, wobei das Anpassen des mindestens halbautonomen Betriebs des ersten Fahrzeugs das Anpassen (138) einer Geschwindigkeit des ersten Fahrzeugs und eines Mindestabstands des ersten Fahrzeugs relativ zu dem einen oder den mehreren zweiten Fahrzeugen umfasst.

10. Verfahren nach einem der Ansprüche 1 bis 9, wobei die eine oder mehreren drahtlosen Nachrichten kooperative Bewusstseinsnachrichten, CAMs, sind oder wobei die eine oder mehreren drahtlosen Nachrichten drahtlose Nachrichten sind, die zusätzlich zu den kooperativen Bewusstseinsnachrichten von dem einen oder den mehreren zweiten Fahrzeugen empfangen werden.

11. Verfahren nach einem der Ansprüche 1 bis 10, umfassend das Übertragen einer drahtlosen Nachricht (140) an das eine oder die mehreren zweiten Fahrzeuge, die drahtlose Nachricht umfassend Informationen über eine oder mehrere Automatisierungsfähigkeiten, zu denen das erste Fahrzeug in der Lage ist.

12. Computerprogramm, das einen Programmcode zum Durchführen des Verfahrens nach einem der Ansprüche 1 bis 11 aufweist, wenn das Computerprogramm auf einem Computer, einem Prozessor oder einer programmierbaren Hardwarekomponente ausgeführt wird.

13. Vorrichtung (10; 20) für ein mindestens halbautonom betriebenes Fahrzeug (100; 200), die Vorrichtung umfassend:
eine Schnittstelle (12; 22) zum Kommunizieren mit einem oder mehreren weiteren Fahrzeugen (100; 200); und
ein Steuermodul (14; 24), das konfiguriert ist, um das Verfahren nach einem der Ansprüche 1 bis 11 durchzuführen.

## Revendications

1. Procédé pour un premier véhicule (100), apte à ajuster un fonctionnement au moins semi-autonome du premier véhicule en fonction d'une prédiction d'un comportement de conduite d'un ou plusieurs seconds véhicules (200), le ou les seconds véhicules étant des véhicules fonctionnant au moins de manière semi-autonome, le procédé comprenant :
la réception (110) d'un ou plusieurs messages sans fil provenant du ou des seconds véhicules,
le ou les messages sans fil comprenant des informations sur une ou plusieurs capacités d'automatisation dont le ou les seconds véhicules sont capables ;
la prédiction (120) du comportement de conduite du ou des seconds véhicules en fonction des informations sur la ou les capacités d'automatisation dont le ou les seconds véhicules sont capables ; et
l'ajustement (130) du fonctionnement au moins semi-autonome du premier véhicule en fonction de la prédiction du comportement de conduite du ou des seconds véhicules, **caractérisé en ce que** le ou les messages sans fil comprennent des informations sur une ou plusieurs capacités de coopération dont le ou les seconds véhicules sont capables et des informations sur une ou plusieurs manœuvres de conduite coopérative actuellement exécutées par le ou les seconds véhicules, dans lequel le comportement de conduite du ou des seconds véhicules est prédit en fonction des informations sur la ou les capacités de coopération dont le ou les seconds véhicules sont capables et des informations sur la ou les manœuvres de conduite coopérative actuellement exécutées par le ou les seconds véhicules.

2. Procédé selon la revendication 1, dans lequel le ou les messages sans fil comprennent des informations sur un fabricant et une version de la ou des capacités d'automatisation dont sont capables le ou les seconds véhicules, dans lequel le comportement de conduite du ou des seconds véhicules est prédit en fonction des informations sur le fabricant et la version de la ou des capacités d'automatisation dont sont capables le ou les seconds véhicules.

3. Procédé selon l'une des revendications 1 à 2, dans lequel le ou les messages sans fil comprennent des informations sur un niveau d'automatisation maximal et/ou sur un niveau d'automatisation actuellement appliqué du ou des seconds véhicules, dans lequel le comportement de conduite du ou des seconds véhicules est prédit en fonction des informations sur le niveau d'automatisation maximal et/ou sur le niveau d'automatisation actuellement appliqué du ou des seconds véhicules.

4. Procédé selon l'une des revendications 1 à 3, dans lequel le ou les messages sans fil comprennent des informations sur un paramètre de performance de conduite actuellement utilisé par le ou les seconds véhicules, dans lequel le comportement de conduite du ou des seconds véhicules est prédit en fonction des informations sur le paramètre de performance de conduite actuellement utilisé par le ou les seconds véhicules.

5. Procédé selon l'une des revendications 1 à 4, dans lequel le ou les messages sans fil comprennent des informations sur une intention de conduite du ou des seconds véhicules, dans lequel le comportement de conduite du ou des seconds véhicules est prédit en fonction des informations sur l'intention de conduite du ou des seconds véhicules.

6. Procédé selon l'une des revendications 1 à 5, dans lequel l'ajustement du fonctionnement au moins semi-autonome du premier véhicule comprend l'ajustement (132) d'un niveau d'automatisation actuellement appliqué du premier véhicule.

7. Procédé selon la revendication 6, comprenant la détermination (134) d'un niveau d'automatisation commun qui est approprié pour être utilisé par le premier véhicule et au moins un sous-ensemble du ou des seconds véhicules en fonction du comportement de conduite prédit du ou des seconds véhicules, et la transmission (135) d'informations sur le niveau d'automatisation commun déterminé à au moins le sous-ensemble du ou des seconds véhicules.

8. Procédé selon l'une des revendications 1 à 7, dans lequel l'ajustement du fonctionnement au moins semi-autonome du premier véhicule comprend la sélection (136) d'au moins un véhicule parmi le ou les seconds véhicules à contacter afin d'effectuer une manœuvre de conduite coordonnée, et la transmission (137) d'un message de coopération à l'au moins un véhicule sélectionné.

9. Procédé selon l'une des revendications 1 à 8, dans lequel l'ajustement du fonctionnement au moins semi-autonome du premier véhicule comprend l'ajustement (138) de l'une parmi une vitesse du premier véhicule et une distance minimale du premier véhicule par rapport au ou aux seconds véhicules.

10. Procédé selon l'une des revendications 1 à 9, dans lequel le ou les messages sans fil sont des messages de sensibilisation à la coopération, CAM, ou dans lequel le ou les messages sans fil sont des messages sans fil qui sont reçus en plus des messages de sensibilisation à la coopération provenant du ou des seconds véhicules.

11. Procédé selon l'une des revendications 1 à 10, comprenant la transmission d'un message sans fil (140) au ou aux seconds véhicules, le message sans fil comprenant des informations sur une ou plusieurs capacités d'automatisation dont le premier véhicule est capable.

12. Programme informatique comportant un code de programme pour la réalisation du procédé selon l'une des revendications 1 à 11, lorsque le programme d'ordinateur est exécuté sur un ordinateur, un processeur, ou un composant matériel programmable.

13. Appareil (10 ; 20) pour un véhicule (100 ; 200) fonctionnant de manière au moins semi-autonome, l'appareil comprenant :
une interface (12 ; 22) pour communiquer avec un ou plusieurs autres véhicules (100 ; 200) ; et
un module de commande (14 ; 24), configuré pour réaliser le procédé selon l'une des revendications 1 à 11.
